# EUROPEAN PATENT SPECIFICATION

(11) **EP 2 200 115 B1**
(45) Date of publication and mention of the grant of the patent: **18.01.2012**
(21) Application number: 09382282.3
(22) Date of filing: 17.12.2009
(51) Int. Cl.: H01M 8/12, H01M 8/24

(54) **Solid oxide fuel cell with metal support**
Festoxidbrennstoffzelle mit Metallhalter
Pile à combustible d'oxyde solide à support métallique

(30) Priority: 19.12.2008 ES 200803627
(43) Date of publication of application: 23.06.2010
(73) Proprietor: Ikerlan, S. Coop., 20500 Arrasate-Mondragon (ES)
(72) Inventor: Laresgoiti Rementeria, Ander, 48250, IURRETA (Bizkaia) (ES); Villarreal Sarria, Igor, 01010, Vitoria (Alava) (ES); Rodríguez Martínez, Lide Mercedes, 20500, ARRASATE-MONDRAGON (Gipuzkoa) (ES)
(74) Representative: Igartua, Ismael

(56) References cited:
- WO-A2-03/071624
- GB-A- 2 381 944
- JP-A- 2003 282 128
- JP-A- 2007 220 632
- JP-A- 2009 238 651
- US-A1- 2006 228 615
- US-A1- 2007 231 660
- US-A1- 2008 233 463

## Description

### TECHNICAL FIELD

This invention relates to tubular solid oxide fuel cells, and more specifically to tubular solid oxide fuel cells that comprise a metal support.

### PRIOR ART

There are known solid oxide fuel cells, which produce electricity directly from fuels by electrochemically combining them with an oxidant, both being in a gaseous state. Each solid oxide fuel cell comprises a first electrode acting as an anode, a second electrode acting as a cathode, with both the anode and the cathode comprising porous materials, and an electrolyte that comprises an ionically conducting material.

A supply system supplies the fuel, preferably to the anode, while the oxidant is supplied to the cathode. In addition, the electrolyte is an electronic insulator that enables the transport of oxygen ions or protons between the two electrodes. The oxidation reaction thus occurs in said anode, with electrons being released to the external circuit and reaching the cathode, thereby generating an electrical current and the known reduction reaction taking place. Generally, the fuel normally used is hydrogen due to its high electrochemical reactivity and to the fact that it may be obtained with relative ease from hydrocarbons, alcohol and even from water. Regarding the oxidant, oxygen is the most widely used as it is found in the air and is therefore easy to obtain.

The solid oxide fuel cells operate at high temperatures within an approximate range of 600 to 1000ºC, and may have a flat or tubular shape, the latter presenting greater mechanical strength and being easier to seal at the ends. In addition, depending on the type of support used in tubular solid oxide fuel cells, there are solid oxide fuel cells with a cathodic support, anodic support, electrolyte support or a metal support.

In general terms, a solid oxide fuel cell is arranged connected at one of its ends to the fuel supply system, while the other end is arranged connected to a system evacuating excess fuel and water, both of which are products of the chemical reaction occurring in the solid oxide fuel cell. It is essential that both ends are sealed properly to the fuel-supply and evacuation systems to ensure that the solid oxide fuel cell performs optimally. Bearing in mind the high operating temperatures to which solid oxide fuel cells are subjected, the materials from which said cell is made, or the arrangement of electrical connectors through which electricity is extracted from the cell, ensure that said sealing is not a simple task.

US 7374835 B2 describes a solid oxide fuel stack that comprises tubular cells with an electrolytic support in which the electrolyte and the anode project out in relation to the cathode, the ends of which comprise fixing members that are fixed tightly to the electrolyte by means of a suitable sealant, cement or a ceramic seal.

US 2007/0231660 A1 describes a sealing member and a method for sealing the ends of a tubular solid oxide fuel cell with an anodic support in which the sealing member comprises a pipe that has a first segment in which the solid oxide cell is housed tightly, and a second segment, continuous to said first segment, that includes a pipe through which fuel enters the fuel cell. The fuel cell has an anode and an electrolyte that project out in relation to the cathode, with the anode and the electrolyte deposited on the anode being housed tightly in the first segment of the sealing member. In order to fix the sealing member to the fuel cell, the external surface of the electrolyte that projects out in relation to the cathode must be covered with a layer of metallic sealant, without said sealant touching the cathode, the electrolyte covered with the layer of sealant must subsequently be inserted into the inside of the sealing member, and said connection must be heated until said layer of sealant melts and solidifies.

### DISCLOSURE OF THE INVENTION

The object of the invention is to provide a tubular solid oxide fuel connected to a fuel- or gas-supply system, according to the claims.

The tubular solid oxide fuel cell according to the invention comprises a first electrode, an electrolyte deposited on the first electrode, and a second electrode deposited on the electrolyte, with the tubular solid oxide fuel cell having at least one open end.

The tubular solid oxide fuel cell comprises a metal support on which is deposited the first electrode, and which includes at least a threaded first end through which the tubular solid oxide fuel cell is tightly fixed to the supply system. As a result, the tightness of the fixing, the structural stability and the electrical conductivity is improved during its operation.

These and other advantages and characteristics of the invention will be made evident in the light of the drawings and the detailed description thereof.

### DESCRIPTION OF THE DRAWINGS

Figure 1 is a schematic cross-sectional view of a first embodiment of a tubular solid oxide fuel cell according to the invention, built into a fuel stack.
Figure 2 is a detail of a cross-section of the sealing of the tubular solid oxide fuel cell shown in Figure 1, and the fixing to a supply system.
Figure 3 is a detail of a cross-section of the sealing of the tubular solid oxide fuel cell shown in Figure 1, and the fixing to an evacuation system.
Figure 4 is a detail of a cross-section of the sealing and the fixing to a supply system of a second embodiment of a tubular solid oxide fuel cell.

### DETAILED DISCLOSURE OF THE INVENTION

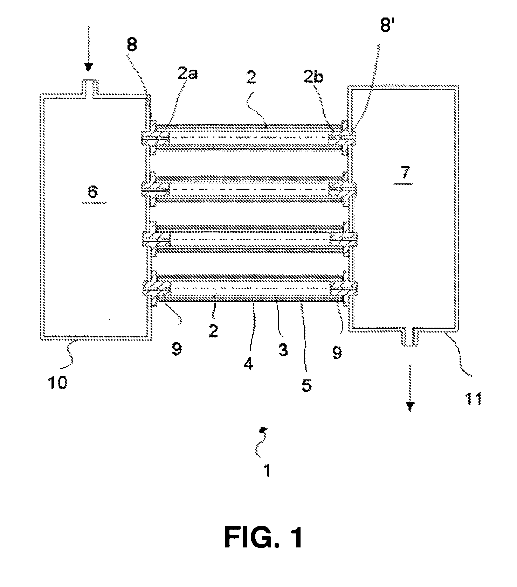

As shown in Figure 1, a solid oxide fuel cell stack comprises tubular solid oxide fuel cells 1, each one of which is connected to a fuel supplying system 6 and to an evacuating system 7 for the remaining fuel. The tubular solid oxide fuel cell 1 according to the invention comprises a metal support 2, a first electrode 3 deposited on said metal support 2, a electrolyte 4 deposited on said first electrode 3, and a second electrode 5 deposited on said electrolyte 4.

The first electrode 3 is the anode and the second electrode 5 is the cathode. Said first electrode 3 comprises Ni-YSZ or an equivalent ceramic material such as Ni-ScsZ, Ni-YDC or Ni-SDC, the electrolyte 4 comprises YSZ or an equivalent material such as Ssz, YDC o SDC, and the cathode comprises lightly doped lanthanum manganite or an equivalent material. The metal support 2 is preferably made of a ferritic alloy, though it may also be made of an austenitic alloy, nickel alloys or equivalent alloys.

In the first embodiment of the invention shown in Figures 1 to 3, the tubular solid oxide fuel cell 1 has both ends open, a first end being connected to the supply system 6 so that it may be supplied with fuel, preferably hydrogen, while a second end is connected to the evacuation system 7 through which remaining fuel is collected along with fuel in the event that the fuel used is hydrogen, the remaining fuel and the water being products of the known chemical reaction occurring in the tubular solid oxide fuel cell 1. In other embodiments, the tubular solid oxide fuel cell 1 may be supplied with hydrocarbons, as a result of which internal alterations must be made.

The supply system 6 comprises an external structure 10, and the evacuation system 7, for its part, comprises an external support 11, the first end of the tubular solid oxide fuel cell 1 being fixed to the external structure 10 through a first connection member 8 and the second end through a second connection member 8' to the external support 11.

The connection members 8, 8' seal the corresponding end of the tubular solid oxide fuel cell 1, fixing it to the external structure 10 or to the external support 11 respectively, the metal support 2 of the tubular solid oxide fuel cell 1 including for that a corresponding internal thread 9 in a first end 2a and in a second end 2b.

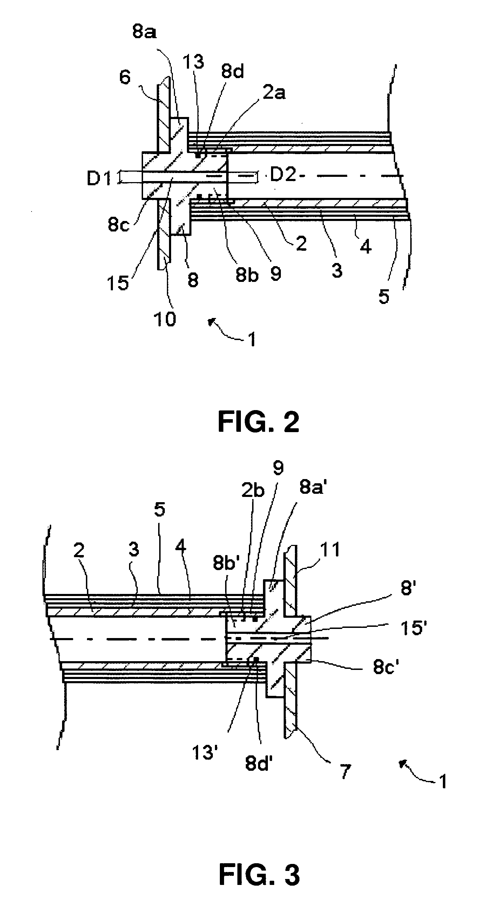

Each connection member 8, 8', shown in detail in Figures 2 and 3, is substantially cylindrical and comprises a base 8a, 8a' on which is supported the corresponding end of the metal support 2, a first segment 8b, 8b' that extends continuously from one of the ends of the base 8a, 8a' and which is housed inside the metal support 2, and a second segment 8c, 8c' that extends continuously from the opposite end of the base 8a, 8a', being fixed to the external structure 10 or the external support 11. The first segment 8b, 8b' and the second segment 8c, 8c' are coaxial and threaded externally, with the result that said first segment 8b, 8b' cooperates with the internal thread 9 of the end of the corresponding metal support 2 for the tight closure of the tubular solid oxide fuel cell 1.

In order to improve the sealing between the metal support 2 and the corresponding connection member 8, 8', each connection member 8, 8' comprises a housing 8d, 8d' wherein a sealing joint 13 is inserted.

In addition, both the internal thread 9 of the metal support 2 and the external thread of the first segment 8b, 8b' of the corresponding connection member 8, 8' may be cylindrically or conically threaded.

Furthermore, each connection member 8, 8' comprises a channel 15, 15' that passes concentrically through said corresponding connection member 8, 8' and through which fuel is able to enter the inside of the metal support 2 from the supply system 6 or the remaining fuel is able to exit along with the water to the evacuation system 7. The channel 15 has an intake diameter D1 that is smaller than or equal to the outlet diameter D2, as shown in Figure 2.

In the tubular solid oxide fuel cell 1 of the invention, the metal support 2 does not have to project out in relation to the rest of the components of said tubular solid oxide fuel cell 1, as occurs with the supports of known tubular cells, thus making them easier to manufacture.

Each connection member 8, 8' is made of a preferably metallic conductor material that has a dilatation coefficient similar to that of the metal support 2, with the result that the connection of the tubular solid oxide fuel cell 1 to the supply system 6 and the evacuation system 7 presents excellent structural stability when said tubular solid oxide fuel cell 1 reaches high operating temperatures. In addition, the high temperatures at which the tubular solid oxide fuel cell 1 operates lead to the creation of microwelds in the threaded connection of the corresponding connection member 8, 8' to the metal support 2, leading to a permanent connection.

Additionally, one of the two connection members 8, 8' assembled to the tubular solid oxide fuel cell 1 acts as a collector of the first electrode 3, while the other connection member 8', 8 may act as a collector of said first electrode 3 or may be insulated.

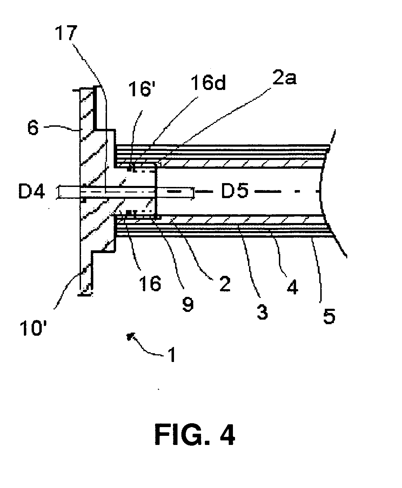

In a second embodiment of the invention shown in Figure 4, the metal support 2 is fixed directly to an external structure 10' of the supply system 6, with the connection member 8, 8' of the first embodiment being arranged integrated into the external structure 10'. The external structure 10' thus includes a threaded projecting part 16 that cooperates with the internal thread 9 of the metal support 2 for the sealing and fixing of the tubular solid oxide fuel cell 1 to the external structure 10' of the supply system 6. The projecting part 16 comprises a channel 17 that passes concentrically through said projecting part 16 and through which fuel is able to enter the inside of the metal support 2. The channel 17 has an intake diameter D4 that is smaller than or equal to the outlet diameter D5, as shown in Figure 4.

The projecting part 16 may include a conical thread, and is made of a preferably metallic conductor material with similar characteristics to the first connection member 8 of the first embodiment. The projecting part 16 also comprises a housing 16b where a sealing joint 16' is inserted and which improves the sealing against the tubular support 2.

Similarly, the metal support 2 is fixed directly to an external support of the evacuation system not shown in Figure 4, with the external support including a projecting part that cooperates with the internal thread 9 of the metal support 2 for the sealing and the fixing of the tubular solid oxide fuel cell 1 to the external support, and through which the remaining fuel exits along with the water to the evacuation system 7. The projecting part built into the external support has similar characteristics to the projecting part 16 built into the external structure 10' of the evacuation system 6.

As in the first embodiment shown in Figures 2 and 3, one of the two projecting parts assembled in the tubular solid oxide fuel cell 1 acts as a collector of the first electrode 3, while the other projecting part may act as a collector of said first electrode 3 or may be arranged in an insulated manner.

In other embodiments not shown in the figures, the tubular solid oxide fuel cell 1 may have a single open end, through which said tubular solid oxide fuel cell 1 is fixed to a supply system and an evacuation system. In this case the corresponding connection member 8, 8' or the projecting part 16 act as collectors of the first electrode 3.

In other embodiments not shown in the figures, the metal support 2 comprises a threaded exterior on one end for its threaded fixing to the external structure 10, either directly or through an intermediate connection member.

## Claims

1. Tubular solid oxide fuel cell connected to a gas fuel supplying system (6), comprising a first electrode (3), an electrolyte (4) deposited on the first electrode (3), and a second electrode (5) deposited on the electrolyte (4), said tubular solid oxide fuel cell (1) having at least one open end, **characterised in that** it comprises a metal support (2) on which the first electrode (3) is deposited, said metal support (2) including a threaded first end (2a) through which the tubular solid oxide fuel cell (1) is tightly fixed to the supply system (6).

2. Tubular solid oxide fuel cell according to the preceding claim, wherein the supply system (6) comprises an external structure (10) and a threaded first connection member (8) that fixes the metal support (2) to the external structure (10).

3. Tubular solid oxide fuel cell according to the preceding claim, wherein the first connection member (8) comprises a base (8a) on which the tubular solid oxide fuel cell (1) is supported, a threaded first segment (8b) continuous to the base (8a), which is housed inside the metal support (2), and a second member (8c), continuous to the base (8a) and threaded, which is fixed to the external structure (10).

4. Tubular solid oxide fuel cell according to any of claims 2 or 3, wherein the first connection member (8) comprises a supply channel (15) that passes through said connection member (8), and through which fuel is injected into the tubular solid oxide fuel cell (1).

5. Tubular solid oxide fuel cell according to any of claims 2 to 4, wherein the first connection member (8) acts as a collector of the first electrode (3).

6. Tubular solid oxide fuel cell according to any of claims 2 to 4, wherein the connection member (8) is insulated.

7. Tubular solid oxide fuel cell according to any of claims 2 to 6, wherein the metal support (2) comprises a second end (2b) through which the tubular solid oxide fuel cell (1) is fixed to an evacuation system (7), the evacuation system (7) comprising an external support (11) and a threaded second connection member (8') that tightly fixes the metal support (2) to the external support (11).

8. Tubular solid oxide fuel cell according to claim 1, wherein the supply system (6) comprises an external structure (10') that comprises an externally threaded projecting part (16), which fixes the metal support (2) to the external structure (10').

9. Tubular solid oxide fuel cell according to the preceding claim, wherein the projecting part (16) comprises a supply through channel (17) through which fuel is injected into the tubular solid oxide fuel cell (1).

10. Tubular solid oxide fuel cell according to any of claims 8 or 9, wherein the projecting part (16) acts as a collector of the first electrode (3).

11. Tubular solid oxide fuel cell according to any of claims 8 or 9, wherein the projecting part (16) is insulated.

12. Tubular solid oxide fuel cell according to any of claims 8 to 11, wherein the metal support (2) comprises a second end (2b) through which the tubular solid oxide fuel cell (1) is fixed to an evacuation system , the evacuation system comprising an external support that comprises an externally threaded projecting part, which fixes the metal support (2) to the external support.

13. Solid oxide fuel stack **characterised in that** it comprises tubular solid oxide fuel cells according to any of the preceding claims.

## Patentansprüche

1. Rohrförmige SOFC-Brennstoffzelle, angeschlossen an eine Brenngasversorgung (6), umfassend eine erste Elektrode (3), einen Elektrolyten (4), der an der ersten Elektrode (3) anliegt, und eine zweite Elektrode (5), die am Elektrolyten (4) anliegt, wobei diese rohrförmige SOFC-Brennstoffzelle (1) mindestens ein offenes Ende besitzt,
**dadurch gekennzeichnet, dass** sie eine Metallhalterung (2) umfasst, an der die erste Elektrode (3) angebracht ist, wobei diese Metallhalterung (2) ein erstes Ende (2a) mit Gewinde umfasst, über das die rohrförmige SOFC-Brennstoffzelle (1) fest mit dem Versorgungssystem (6) verbunden ist.

2. Rohrförmige SOFC-Brennstoffzelle gemäß dem vorausgehenden Anspruch, wobei das Versorgungssystem (6) eine externe Struktur (10) und ein erstes Verbindungsglied (8) mit Gewinde umfasst, das die Metallhalterung (2) an der externen Struktur (10) befestigt.

3. Rohrförmige SOFC-Brennstoffzelle gemäß dem vorausgehenden Anspruch, wobei das erste Verbindungsglied (8) einen Sockel (8a) umfasst, auf dem die rohrförmige SOFC-Brennstoffzelle (1) gehalten wird, ein erstes Segment (8b) mit Gewinde als Fortsetzung des Sockels (8a), der innerhalb der Metallhalterung (2) untergebracht ist, und ein zweites Glied (8c) mit Gewinde als Fortsetzung des Sockels (8a), das an der externen Struktur (10) befestigt ist.

4. Rohrförmige SOFC-Brennstoffzelle gemäß einem der Ansprüche 2 oder 3, wobei das erste Verbindungsglied (8) einen Versorgungskanal (15) umfasst, welcher durch dieses Verbindungsglied (8) führt und durch den Brennstoff in die rohrförmige SOFC-Brennstoffzelle (1) eingespritzt wird.

5. Rohrförmige SOFC-Brennstoffzelle gemäß einem der Ansprüche 2 bis 4, wobei das erste Verbindungsglied (8) als Kollektor der ersten Elektrode (3) dient.

6. Rohrförmige SOFC-Brennstoffzelle gemäß einem der Ansprüche 2 bis 4, wobei das Verbindungsglied (8) isoliert ist.

7. Rohrförmige SOFC-Brennstoffzelle gemäß einem der Ansprüche 2 bis 6, wobei die Metallhalterung (2) ein zweites Ende (2b) umfasst, über das die rohrförmige SOFC-Brennstoffzelle (1) an einem Ablasssystem (7) befestigt ist, wobei das Ablasssystem (7) eine externe Halterung (11) und ein zweites Verbindungsglied (8') mit Gewinde umfasst, das die Metallhalterung (2) fest an der externen Halterung (11) befestigt.

8. Rohrförmige SOFC-Brennstoffzelle gemäß Anspruch 1, wobei das Versorgungssystem (6) eine externe Struktur (10') umfasst, welche ein außen mit einem Gewinde versehenes, überstehendes Teil (16) umfasst, das die Metallhalterung (2) an der externen Struktur (10') befestigt.

9. Rohrförmige SOFC-Brennstoffzelle gemäß dem vorausgehenden Anspruch, wobei das überstehende Teil (16) eine Versorgung durch den Kanal (17) umfasst, durch den Brennstoff in die rohrförmige SOFC-Brennstoffzelle (1) eingespritzt wird.

10. Rohrförmige SOFC-Brennstoffzelle gemäß einem der Ansprüche 8 oder 9, wobei das überstehende Teil (16) als Kollektor für die erste Elektrode (3) dient.

11. Rohrförmige SOFC-Brennstoffzelle gemäß einem der Ansprüche 8 oder 9, wobei das überstehende Teil (16) isoliert ist.

12. Rohrförmige SOFC-Brennstoffzelle gemäß einem der Ansprüche 8 bis 11, wobei die Metallhalterung (2) ein zweitens Ende (2b) umfasst, durch das die rohrförmige SOFC-Brennstoffzelle (1) an einem Ablasssystem befestigt ist, wobei das Ablasssystem eine externe Halterung umfasst, die ein außen mit einem Gewinde versehenes überstehendes Teil umfasst, welches die Metallhalterung (2) an der externen Halterung befestigt.

13. SOFC-Brennstoffzellenstack, **dadurch gekennzeichnet, dass** sie Rohrförmige SOFC-Brennstoffzellen gemäß einem der vorausgehenden Ansprüche umfasst.

## Revendications

1. Pile tubulaire à combustible à oxyde solide connectée à un système d'alimentation en combustible gazeux (6) comprenant une première électrode (3), un électrolyte (4) déposé sur la première électrode (3) et une seconde électrode (5) déposée sur l'électrolyte (4), ladite pile tubulaire à combustible à oxyde solide (1) présentant au moins une extrémité ouverte, **caractérisée en ce qu'**elle comprend un support métallique (2) sur lequel la première électrode (3) est déposée, ledit support métallique (2) présentant une première extrémité filetée (2a) grâce à laquelle la pile tubulaire à combustible à oxyde solide (1) est solidement fixée sur le système d'alimentation (6).

2. Pile tubulaire à combustible à oxyde solide selon la revendication précédente où le système d'alimentation comprend une structure externe (10) et un premier membre de connexion fileté (8) qui fixe le support métallique (2) sur la structure externe (10).

3. Pile tubulaire à combustible à oxyde solide selon la revendication précédente où le premier membre de connexion (8) comprend une base (8a) qui sert de support à la pile tubulaire à combustible à oxyde solide (1), un premier support fileté (8b) continu jusqu'à la base (8a) qui est abrité à l'intérieur du support métallique (2) et un second membre (8c), continu jusqu'à la base (8a) et fileté, qui est fixé sur la structure externe (10).

4. Pile tubulaire à combustible à oxyde solide selon l'une quelconque des revendications 2 ou 3 où le premier membre de connexion (8) comprend un canal d'alimentation (15) qui passe à travers ledit membre de connexion (8) et à travers lequel du combustible est injecté dans la pile tubulaire à combustible à oxyde solide (1).

5. Pile tubulaire à combustible à oxyde solide selon l'une quelconque des revendications 2 à 4 où le premier membre de connexion (8) fait office de collecteur de la première électrode (3).

6. Pile tubulaire à combustible à oxyde solide selon l'une quelconque des revendications 2 à 4 où le membre de connexion (8) est isolé.

7. Pile tubulaire à combustible à oxyde solide selon l'une quelconque des revendications 2 à 6 où le support métallique (29) comprend une seconde extrémité (2b) à travers laquelle la pile tubulaire à combustible à oxyde solide (1) est fixée sur le système d'évacuation (7), le système d'évacuation (7) comprenant un support externe (11) et un second membre de connexion fileté (8') qui fixe fermement le support métallique (2) sur le support externe.

8. Pile tubulaire à combustible à oxyde solide selon la revendication 1 où le système d'alimentation (6) comprend une structure externe (10') qui comprend une partie saillante extérieure filetée (16) qui fixe le support métallique (2) sur la structure externe (10').

9. Pile tubulaire à combustible à oxyde solide selon la revendication précédente où la partie saillante (16) comprend un canal intermédiaire d'alimentation (17) à travers lequel du combustible est injecté dans la pile tubulaire à combustible à oxyde solide (1).

10. Pile tubulaire à combustible à oxyde solide selon l'une quelconque de la revendication 8 ou 9 où la partie saillante (16) fait office de collecteur de la première électrode (3).

11. Pile tubulaire à combustible à oxyde solide selon l'une quelconque des revendications 8 ou 9 où la partie saillante (16) est isolée.

12. Pile tubulaire à combustible à oxyde solide selon l'une quelconque des revendications 8 à 11 où le support métallique (2) comprend une seconde extrémité (2b) à travers laquelle la pile tubulaire à combustible à oxyde solide (1) est fixée sur un système d'évacuation, le système d'évacuation comprenant un support externe doté d'une partie saillante filetée extérieurement qui fixe le support métallique (2) sur le support externe.

13. Empilage à combustible d'oxyde solide **caractérisé en ce qu'**il comprend des piles à combustible à oxyde solide selon l'une quelconque des revendications précédentes.
